# EUROPEAN PATENT SPECIFICATION

(11) **EP 2 302 378 B1**
(45) Date of publication and mention of the grant of the patent: **13.01.2016**
(21) Application number: 10179354.5
(22) Date of filing: 24.09.2010
(51) Int. Cl.: G01N 15/14, G01N 15/12, G01N 15/00, G01N 15/10

(54) **Blood cell counter, diagnosis support method and computer program product**
Blutzellenzähler, Diagnosehilfsverfahren und Computerprogrammprodukt
Compteur de cellules sanguines, procédé de support de diagnostic et produit de programme informatique

(30) Priority: 25.09.2009 JP 2009220310
(43) Date of publication of application: 30.03.2011
(73) Proprietor: SYSMEX CORPORATION, Kobe-shi, Hyogo 651-0073 (JP)
(72) Inventor: Linssen, Jo, 22848, Norderstedt (DE); Schäfer, Michael, 22848, Norderstedt (DE)
(74) Representative: Hoffmann Eitle

(56) References cited:
- EP-A1- 2 083 268
- EP-A2- 1 967 840
- EP-A2- 1 998 179
- WO-A1-01/94938
- US-A- 5 692 220
- US-A- 5 812 419
- US-A- 5 851 835
- US-A- 5 939 326
- US-A1- 2006 004 530

## Description

### FIELD OF THE INVENTION

The present invention relates to a blood cell counter, a diagnosis support method, and a computer program product.

### BACKGROUND

Systemic Inflammatory Response Syndrome (SIRS) is a state where a subject is experiencing a serious inflammatory response in the whole body due to infection, injury, surgery, acute pancreatitis, or the like.

An example of SIRS accompanied by an infectious inflammatory response is septicemia. Septicemia is a disease that, if not appropriately treated at an early stage, the symptoms thereof can progress to serious septicemia, septic shock, and multiple organ dysfunction syndrome (MOD), ultimately leading to death. Therefore, if a subject has been given a diagnosis of SIRS, early determination of whether the response is an infectious inflammatory response or a noninfectious inflammatory response, and early diagnosis of whether the subject has septicemia have a great influence on the treatment to be given to the subject. Moreover, the determination of whether the response is an infectious inflammatory response or a noninfectious inflammatory response may have a great influence on the treatment to be given to a subject who does not have SIRS.

Conventionally, a diagnosis of septicemia is performed by confirming the presence of infecting bacteria by culturing the blood of the subject. United States Patent Publication No. 2008/0114576 discloses a method for supporting a diagnosis of septicemia by using detection items such as a monocyte count, a lymphocyte count, and a white blood cell count, in combination with detection items such as cytokines and cell surface biomarkers. Values of the detection items such as the monocyte count, the lymphocyte count, and the white blood cell count are obtained by subjecting the blood of the subject to detections by a blood cell counter. Values of the detection items such as the cytokines and the cell surface biomarkers are obtained by centrifuging the blood collected from the subject and then subjecting the obtained serum and plasma to analysis that uses a fluorescent bead array system or the like that utilizes antigen-antibody reactions.

However, in the method of giving a diagnosis of septicemia by confirming the presence of infecting bacteria though culturing the blood of the subject, a process of culturing the blood is indispensable. Accordingly, there is a problem in that a lot of work and costs are required in order to determine whether the inflammatory response of the subject is an infectious inflammatory response or a noninfectious inflammatory response.

In addition, the diagnosis support method disclosed in United States Patent Publication No. 2008/0114576 has a problem that the method also requires a lot of work and costs in order to obtain necessary information about cytokines, cell surface biomarkers, and the like, in addition to the information based on the detection result of the blood detected by the blood cell counter.
US 2006/0004530 A1 provides an analyzer capable of analyzing an analyte with an analytical condition corresponding to a minor classification prepared by subdividing the species (major classification) of the analyte. This analyzer selects a major classification corresponding to the analyte to be analyzed from a plurality of major classifications indicating the types of analytes, preferentially displays minor classifications, belonging to the selected major classification, prepared by subdividing the corresponding major classification, selects one of the displayed minor classifications, and analyzes the analyte on the basis of an analytical condition corresponding to the selected minor classification.

### SUMMARY

The scope of the present invention is defined solely by the appended claims. In particular, the present invention proposes a blood cell counter according to claim 1, a diagnosis support method according to claim 9 and a computer program product according to claim 13. Further embodiments are defined by the dependent claims.
(1) A first aspect of the present invention is a blood cell counter comprising: a detector for detecting blood cells in blood of a subject; and a controller for obtaining, based on a detection result by the detector, first analytical information about hemoglobin amount of red blood cells in the blood and second analytical information about granulocytes in the blood, and for outputting diagnosis support information for supporting determination of whether an inflammatory response of the subject is an infectious inflammatory response or a noninfectious inflammatory response, based on the first analytical information and the second analytical information that have been obtained. According to this configuration, it is not necessary to culture the blood, and not necessary to detect blood cells in the blood by using an apparatus such as an apparatus utilizing antigen-antibody reactions, other than the blood cell counter. Therefore, it is possible to reduce the work and costs necessary for performing tests.
   Note that the blood cell counter is an apparatus for optically or electrically counting the blood cells, after subjecting the blood to dilution, hemolyzation, staining, and the like. Examples of such a blood cell counter include XE-2100 (manufactured by Sysmex Corporation), LH700 series (manufactured by Beckman Coulter Inc.), CELL-DYN-4000 (manufactured by Abbott Laboratories), ADVIA-2120 (manufactured by Siemens Healthcare Diagnostics), and the like. These blood cell counters are configured to detect a CBC, types of white blood cells, and reticulocytes (RET).
(2) The apparatus of (1), wherein the first analytical information is information about hemoglobin amount of reticulocytes.
(3) The apparatus of (1), wherein the first analytical information is information about a difference between hemoglobin amount of reticulocytes and hemoglobin amount of mature red blood cells.
(4) The apparatus of any one of (1) to (3), wherein the second analytical information is information about neutrophils or immature granulocytes.
(5) The apparatus of any one of (1) to (4), wherein the controller obtains third analytical information about plasma cells based on the detection result by the detector, and outputs the diagnosis support information based on all analytical information from the first analytical information to the third analytical information.
(6) The apparatus of (5), wherein the detector is configured to detect blood cells in stained blood, and the controller obtains analytical information about the number of neutrophils as the second analytical information, obtains based on the detection result by the detector fourth analytical information indicating a degree of staining of neutrophils and fifth analytical information about a number of immature granulocytes, and outputs the diagnosis support information based on all analytical information from the first analytical information to the fifth analytical information.
(7) The apparatus of any one of (1) to (6), wherein the controller calculates an index based on the first analytical information and the second analytical information by using a predetermined standard, and outputs the diagnosis support information based on the calculated index. According to this configuration, it is possible to support the determination of whether the inflammatory response of a subject is an infectious inflammatory response or a noninfectious inflammatory response, without performing complicated processes.
(8) The apparatus of (7), wherein the diagnosis support information is outputted based on a result of comparing the index calculated by using the predetermined standard with a predetermined threshold value. According to this configuration, it is possible to support the determination of whether the inflammatory response of a subject is an infectious inflammatory response or a noninfectious inflammatory response, without performing complicated processes.
(9) The apparatus of any one of (1) to (6), wherein the controller calculates an index based on the first analytical information and the second analytical information by using a predetermined standard, and outputs the calculated index as the diagnosis support information. According to this configuration, it is possible to support the determination of whether the inflammatory response of a subject is an infectious inflammatory response or a noninfectious inflammatory response, without performing complicated processes.
(10) A second aspect of the present invention is a diagnosis support method comprising: receiving inputs of first analytical information and second analytical information, the first analytical information and the second analytical information being based on a result of detection of blood cells in blood of a subject, the first analytical information being about hemoglobin amount of red blood cells in the blood, the second analytical information being about granulocytes in the blood; and outputting diagnosis support information for supporting determination of whether an inflammatory response of the subject is an infectious inflammatory response or a noninfectious inflammatory response, based on the first analytical information and the second analytical information of which inputs have been received. According to this method, it is possible to reduce the work and costs necessary to perform tests.
(11) The method of (10), wherein the outputting of the diagnosis support information is performed based on an index that is based on the first analytical information and the second analytical information of which inputs have been received and that is calculated by using a predetermined standard.
(12) The method of (11), wherein the outputting of the diagnosis support information is performed based on a result of comparing the index calculated by using the predetermined standard with a predetermined threshold value.
(13) The method of (10), wherein the diagnosis support information is an index that is based on the first analytical information and the second analytical information of which inputs have been received and that is calculated by using a predetermined standard.
(14) The method of any one of (10) to (13), wherein the first analytical information and the second analytical information of which inputs are received are information based on a result of detection of blood cells in blood of a subject showing a systemic inflammatory response, information based on a result of detection of blood cells in blood of a subject who has been given a diagnosis of Systemic Inflammatory Response Syndrome, or information based on a result of detection of blood cells in blood of a subject in an intensive care unit. According to this method, with respect to a subject showing a systemic inflammatory response but not meeting the criteria, a subject who has been given a diagnosis of SIRS, or a subject in an intensive care unit, for giving a diagnosis of SIRS, it is possible to support the determination of whether the inflammatory response of the subject is an infectious inflammatory response or a noninfectious inflammatory response, based on the analytical information obtained by the blood cell counter, while reducing the work and costs necessary for performing tests.
(15) A third aspect of the present invention is a computer program product, comprising: a computer readable medium; and instructions, on the computer readable medium, adapted to enable a general purpose computer to perform operations comprising: receiving inputs of first analytical information and second analytical information, the first analytical information and the second analytical information being based on a result of detection of blood cells in blood of a subject, the first analytical information being about hemoglobin amount of red blood cells in the blood, the second analytical information being about granulocytes in the blood; and outputting diagnosis support information for supporting determination of whether an inflammatory response of the subject is an infectious inflammatory response or a noninfectious inflammatory response, based on the first analytical information and the second analytical information of which inputs have been received. According to this computer program product, it is not necessary to culture the blood, and not necessary to detect blood cells in the blood by using an apparatus such as an apparatus utilizing antigen-antibody reactions, other than the blood cell counter. Therefore, it is possible to reduce the work and costs necessary for performing tests.

### BRIEF DESCRIPTION OF THE DRAWINGS

FIG. 1 is a front view showing a schematic configuration of a blood cell counter according to an embodiment of the present invention;
FIG. 2 is a block diagram showing a configuration of a detection unit of the blood cell counter according to the embodiment of the present invention;
FIG 3 is a schematic plan view schematically showing a configuration of a detector of the blood cell counter according to the embodiment of the present invention;
FIG. 4 is a block diagram showing a configuration of a data processing unit of the blood cell counter according to the embodiment of the present invention;
FIG. 5 is a flowchart showing a sequence of processing performed by a CPU of a data processing section of the data processing unit of the blood cell counter according to the embodiment of the present invention;
FIG. 6 shows an RET scattergram created by the blood cell counter according to the embodiment of the present invention;
FIG. 7 shows a 4 DIFF scattergram created by the blood cell counter according to the embodiment of the present invention;
FIG. 8 shows a WBC/BASO scattergram created by the blood cell counter according to the embodiment of the present invention;
FIG. 9 shows ROC curves;
FIG. 10 is a flowchart showing a sequence of calculating an index (ICIS) performed by the CPU of the data processing unit of the blood cell counter according to the embodiment of the present invention;
FIG. 11 shows changes of an index (ICIS (Delta-He)) in subjects with infectious inflammatory responses and subjects with noninfectious inflammatory responses, respectively;
FIG. 12 shows changes of an index (ICIS (RET-He)) in subjects with infectious inflammatory responses and subjects with noninfectious inflammatory responses, respectively;
FIG. 13 shows changes of CRP amounts used for determining whether an inflammatory response of a subject is an infectious inflammatory response or a noninfectious inflammatory response;
FIG. 14 shows changes of score values of a neutrophil count (Neut#); and
FIG. 15 shows AUC values and combinations of analytical information used in calculating indices (ICIS).

### DETAILED DESCRIPTION OF THE EMBODIMENT

Hereinafter, a specific description will be given of a blood cell counter, a diagnosis support apparatus, a diagnosis support method, and a computer program according to an embodiment of the present invention, with reference to the drawings. It will be understood that the embodiment below is not intended to limit the invention defined by me claims, and that all the combinations of the features described in the embodiment are not necessarily the essential matters for means for solution.

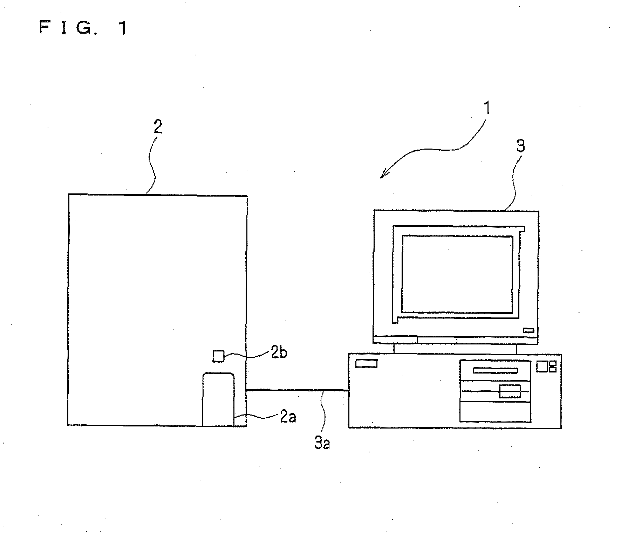

FIG. 1 is a front view showing a schematic configuration of the blood cell counter according to the embodiment of the present invention. As shown in FIG. 1, the blood cell counter 1 according to the embodiment of the present invention is an apparatus that detects blood cells in the blood of a subject showing a systemic inflammatory response and supports determination of whether the inflammatory response is an infectious inflammatory response or a noninfectious inflammatory response. The blood cell counter 1 mainly includes a detection unit 2 and a data processing unit 3. The detection unit 2 detects blood cells in the blood of the subject.

The data processing unit 3 receives data containing results of detection performed by the detection unit 2 and performs analysis processes. The blood cell counter 1 is installed, for example, in a medical institution such as a hospital or a pathology laboratory. The detection unit 2 and the data processing unit 3 are connected via a transmission cable 3a so as to be able to perform data communication therebetween. Note that the connection between the detection unit 2 and the data processing unit 3 is not limited to a direct connection formed by the transmission cable 3a. For example, the detection unit 2 and the data processing unit 3 may be connected via a dedicated line using a telephone line, a LAN, or a communication network such as the Internet.

At the lower right of the front face of the detection unit 2, there is provided a blood collection tube setting part 2a on which a blood collection tube containing the blood of a subject can be set. When an operator presses a push button switch 2b provided near the blood collection tube setting part 2a, the blood collection tube setting part 2a moves toward the operator, thereby enabling the operator to set the blood collection tube thereon. When the operator presses the push button switch 2b again after setting the blood collection tube, the blood collection tube setting part 2a moves toward the detection unit 2 to be accommodated in the detection unit 2.

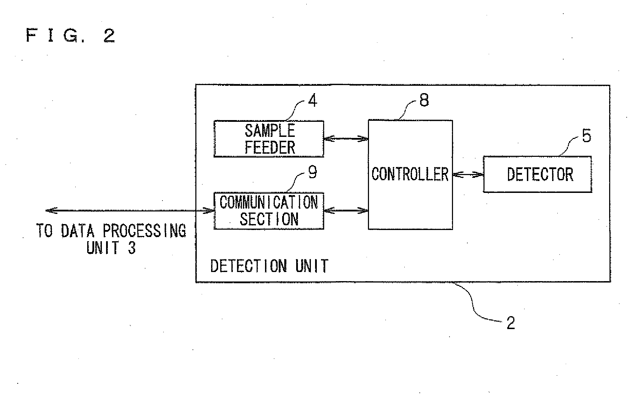

FIG. 2 is a block diagram showing a configuration of the detection unit 2 of the blood cell counter 1 according to the embodiment of the present invention. Referring to FIG. 2, the detection unit 2 has a similar configuration to that of a main body of a conventional blood cell counter, and includes a sample feeder 4, a detector 5, a controller 8, and a communication section 9. The sample feeder 4 is a fluid unit including a chamber, a plurality of solenoid valves, a diaphragm pump, and the like. The sample feeder 4 feeds to the detector 5 a detection sample which is prepared by mixing the blood of a subject with a reagent, the detection sample being set in the detection unit 2. The controller 8 controls the operation of the components of the detection unit 2. The communication section 9 may be, for example, an RS-232C interface, a USB interface, or an Ethernet (registered trademark) interface, and transmits/receives data to/from the data processing unit 3.

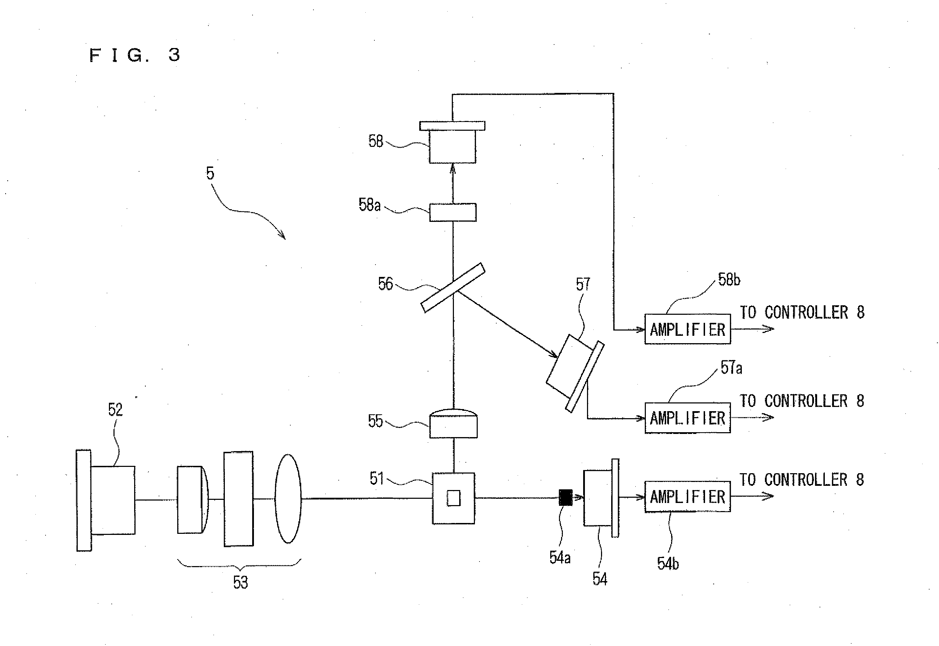

FIG. 3 is a schematic plan view schematically showing a configuration of the detector 5 of the blood cell counter 1 according to the embodiment of the present invention. Referring to FIG. 3, the detector 5 is an optical flow cytometer, and detects white blood cells (WBC), reticulocytes (RET) and mature red blood cells (RBC) in blood by flow cytometry using a semiconductor laser. The term "red blood cell" is used herein as categorically including "reticulocyte (RET)" and "mature red blood cell (RBC)". The detector 5 includes a flow cell 51 for forming a liquid flow of the detection sample. The flow cell 51 is formed from a translucent material such as quartz, glass, synthetic resin, or the like, and has a tubular shape. The flow cell 51 has a flow path therein through which the detection sample and a sheath liquid flow. The detector 5 includes a semiconductor laser light source 52, which is disposed so as to output laser light toward the flow cell 51. Between the semiconductor laser light source 52 and the flow cell 51, an illumination lens system 53 including a plurality of lenses is provided. The illumination lens system 53 collects parallel beams outputted from the semiconductor laser light source 52 to form a beam spot. An optical axis extends linearly from the semiconductor laser light source 52 and through the flow cell 51. A photodiode 54 is provided on the optical axis, such that the photodiode 54 is located on the opposite side of the flow cell 51 from the illumination lens system 53. A beam stopper 54a is provided so as to block light coming directly from the semiconductor laser light source 52.

When a detection sample flows into the flow cell 51, scattered light and fluorescence occur based on the laser light. Of the scattered light and fluorescence, the light in the irradiation (i.e. forward) direction of the laser light is photoelectrically converted by the photodiode 54. Of the light traveling along the optical axis linearly extending from the semiconductor laser light source 52, the light coming directly from the semiconductor laser light source 52 is blocked by the beam stopper 54a. Incident on the photodiode 54 is only the scattered light that travels substantially along this optical axis direction (hereinafter referred to as forward scattered light). The forward scattered light emitted from the detection sample flowing in the flow cell 51 is photoelectrically converted by the photodiode 54 into electrical signals, and each photoelectrically converted electrical signal (hereinafter, referred to as a forward scattered light signal) is amplified by an amplifier 54b, to be outputted to the controller 8. The intensity of the forward scattered light signal indicates the size of a blood cell.

A side condenser lens 55 is provided laterally to the flow cell 51, so as to be located in a direction on an optical axis that crosses the optical axis that linearly extends from the semiconductor laser light source 52 to the photodiode 54. The side condenser lens 55 condenses side light (i.e. light that is outputted in the direction on an optical axis that crosses the optical axis that linearly extends from the semiconductor laser light source 52 to the photodiode 54) which occurs when laser light is emitted to the detection sample passing through the flow cell 51. A dichroic mirror 56 is provided downstream of the side condenser lens 55. The light condensed by the side condenser lens 55 is separated by the dichroic mirror 56 into scattered light components and fluorescence components. In an optical axis direction in which the light reflected by the dichroic mirror 56 advances (i.e. the direction on an optical axis that crosses the optical axis passing through the side condenser lens 55 and the dichroic mirror 56), a photodiode 57 for receiving the side scattered light is provided. On the optical axis that passes through the side condenser lens 55 and the dichroic mirror 56, an optical filter 58a and a photodiode 58 for receiving the side fluorescence are provided.

The light reflected by the dichroic mirror 56 is the side scattered light, and is photoelectrically converted into electrical signals by the photodiode 57. Each photoelectrically converted electrical signal (hereinafter referred to as a side scattered light signal) is amplified by an amplifier 57a and then outputted to the controller 8. Each side scattered light signal indicates internal information of a blood cell (the size of the nucleus, etc.). The light transmitted through the dichroic mirror 56, which is the side fluorescence, is photoelectrically converted into electrical signals by the photodiode 58 after being wavelength-selected by the optical filter 58a. Each photoelectrically converted electrical signal (hereinafter referred to as a side fluorescence signal) is amplified by an amplifier 58b and then outputted to the controller 8. Each side fluorescence signal indicates the degree of staining of a blood cell.

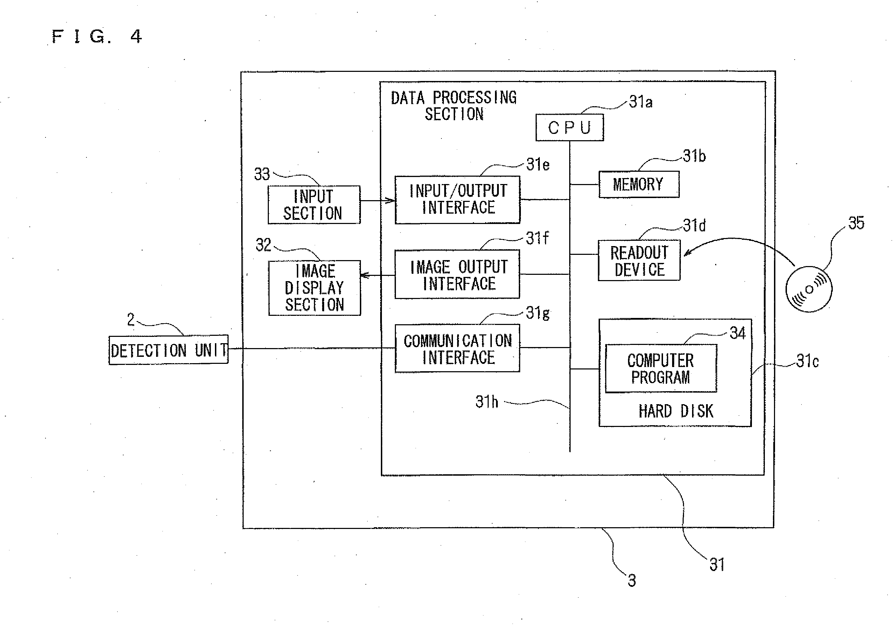

FIG. 4 is a block diagram showing a configuration of the data processing unit 3 of the blood cell counter 1 according to the embodiment of the present invention. As shown in FIG. 4, the data processing unit 3 includes at least a data processing section 31 including a CPU (Central Processing Unit) and the like, an image display section 32, and an input section 33. The data processing section 31 includes a CPU 31a, a memory 31b, a hard disk 31c, a readout device 31d, an input/output interface 31e, an image output interface 31f, a communication interface 31g, and an internal bus 31h. In the data processing section 31, the CPU 31a is connected via the internal bus 31h to each of the memory 31b, the hard disk 31c, the readout device 31d, the input/output interface 31e, the image output interface 31f, and the communication interface 31g.

The CPU 31a controls the operation of each of the above hardware components and processes data received from the detection unit 2 in accordance with a computer program 34 stored in the hard disk 31c.

The memory 31b is structured as a volatile memory such as an SRAM, or a flash memory. To the memory 31b, a load module is loaded at the execution of the computer program 34. The memory 31b stores temporary data and the like which are generated at the execution of the computer program 34.

The hard disk 31c is structured as a fixed-type storage device or the like and is incorporated in the data processing unit 3. The computer program 34 is downloaded by the readout device 31d, which is a portable disc drive, from a portable storage medium 35 such as a DVD, a CD-ROM or the like that stores information, such as programs, data, and the like. The computer program 34 is then stored in the hard disk 31c. The computer program 34 is loaded from the hard disk 31c to the memory 31b so as to be executed. It will be understood that the computer program 34 may be a computer program downloaded via the communication interface 31g from an external computer. The hard disk 31c stores a message indicating that the subject has or probably has an infectious inflammation, and a message indicating that the subject has or probably has a noninfectious inflammation, as diagnosis support information for supporting determination of whether the inflammatory response of the subject is an infectious inflammatory response or a noninfectious inflammatory response. The hard disk 31c also stores first to third score thresholds (described below) for each type of analytical information, which are used for scoring the analytical information, and determination thresholds (described below), which are used for determining whether the inflammatory response of the subject is an infectious inflammatory response or a noninfectious inflammatory response.

The input/output interface 31e is connected to the input section 33 structured as a keyboard, a tablet, or the like. The image output interface 31f is connected to the image display section 32 which may be a CRT monitor, an LCD, or the like.

The communication interface 31g is connected to the internal bus 31 h, and performs data transmission/reception with an external computer, the detection unit 2, or the like by being connected to an external network such as the Internet, a LAN, and a WAN. For example, the above hard disk 31c is not limited to the one incorporated in the data processing unit 3, but may be an external storage medium such as an external storage or the like that is connected to the data processing unit 3 via the communication interface 31g.

Hereinafter, description is given of the operation of the blood cell counter 1 according to the embodiment of the present invention. First, the sample feeder 4 of the blood cell counter 1 aspirates blood from a blood collection tube set in the blood collection tube setting part 2a, divides the aspirated blood into three aliquots, and adds predetermined dedicated reagents to the aliquots, thereby preparing an RET detection sample, a 4 DIFF detection sample, and a WBC/BASO detection sample. Note that the RET detection sample is prepared by subjecting the blood to a dilution process and further to a staining process by use of a dedicated reagent for detecting reticulocytes. The 4 DIFF detection sample is prepared by subjecting the blood to a dilution process, to a hemolyzation process by use of a dedicated reagent for classifying white blood cells, and further to a staining process by use of a dedicated reagent for DIFF detection. The WBC/BASO detection sample is prepared by subjecting the blood to a dilution process and further to a hemolyzation process by use of a dedicated reagent for detecting white blood cells. The sample feeder 4 feeds the prepared detection samples to the flow cell 51 of the detector 5.

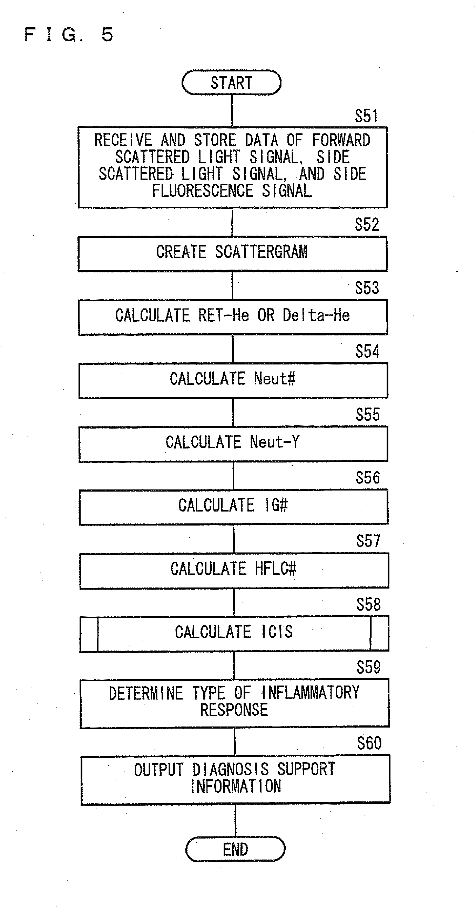

FIG. 5 is a flowchart showing a sequence of processing performed by the CPU 31a of the data processing section 31 of the data processing unit 3 of the blood cell counter 1 according to the embodiment of the present invention. First, when a detection sample is fed to the flow cell 51, the CPU 31 a receives via the communication interface 31g data of forward scattered light signals, side scattered light signals, and side fluorescence signals outputted by the detector 5 of the detection unit 2, and stores the data in the memory 31b (step S51). The CPU 31a creates a plurality of scattergrams based on the data of the forward scattered light signals, the side scattered light signals, and the side fluorescence signals detected by the detector 5 and stored in the memory 31b (step S52). In step S52, the CPU 31a creates at least an RET scattergram having a Y-axis of the intensity of forward scattered light signals of the reticulocytes (RET) and an X-axis of the intensity of side fluorescence signals of the reticulocytes (RET), both of which signals are outputted by the detector 5; a 4 DIFF scattergram having a Y-axis of the intensity of side fluorescence signals of the white blood cells (WBC) and an X-axis of the intensity of side scattered light signals of the white blood cells (WBC), both of which signals are outputted by the detector 5; and a WBC/BASO scattergram having a Y-axis of the intensity of forward scattered light signals of the white blood cells (WBC) and an X-axis of the intensity of side scattered light signals of the white blood cells (WBC), both of which signals are outputted by the detector 5.

Next, the CPU 31 a calculates, by using the RET scattergram, the amount of hemoglobin contained in the reticulocytes (RET-He), or the difference (Delta-He) between the amount of hemoglobin contained in the reticulocytes (RET) and the amount of hemoglobin contained in the mature red blood cells (RBC), either of which is analytical information about the hemoglobin amount of the red blood cells in the blood (step S53).

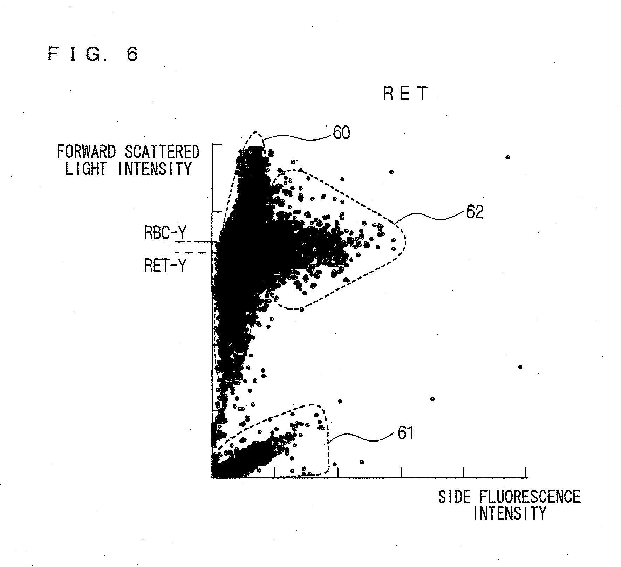

FIG. 6 shows an RET scattergram created by the blood cell counter 1 according to the embodiment of the present invention. As shown in FIG 6, the RET scattergram classifies the blood cells into three areas of a mature red blood cell (RBC) area 60, a platelet (PLT) area 61, and a reticulocyte (RET) area 62. Based on the RET scattergram, it is possible to calculate an RBC-Y, which is an average value of the forward scattered light intensities of all the cells contained in the mature red blood cell area 60 (i.e., mature red blood cells (RBC)), and an RET-Y, which is an average value of the forward scattered light intensities of all the cells contained in the reticulocyte area 62 (i.e., reticulocytes (RET)).

The RET-He can be calculated by plugging the RET-Y calculated based on the RET scattergram into a (formula 1).

[Formula 1] RET - He = A × exp (B × RET - Y)

A=5. 8439, B=0.0098

The Delta-He is calculated by subtracting an RBC-He, which is the amount of hemoglobin of the mature red blood cells, from the RET-He. Accordingly, in order to calculate the Delta-He, it is necessary to calculate the RBC-He, first. The RBC-He is calculated by plugging the RBC-Y calculated based on the RET scattergram into a (formula 2). Note that US Patent No. 7283217 discloses a method of calculating the Delta-He and the RET-He in detail.

[Formula 2] RBC - He = C × exp (D × RBC - Y)

C=5. 8439, D = 0.0098

Next, the CPU 31a calculates a neutrophil count (Neut#), which is analytical information about the granulocytes in the blood, by using the 4 DIFF scattergram and the WBC/BASO scattergram (step S54). Note that the term "granulocyte" is used herein as categorically including both of "mature granulocyte" and "immature granulocyte". The "mature granulocyte" categorically includes neutrophil (Neut), eosinophil (EO), and basophil (BASO).

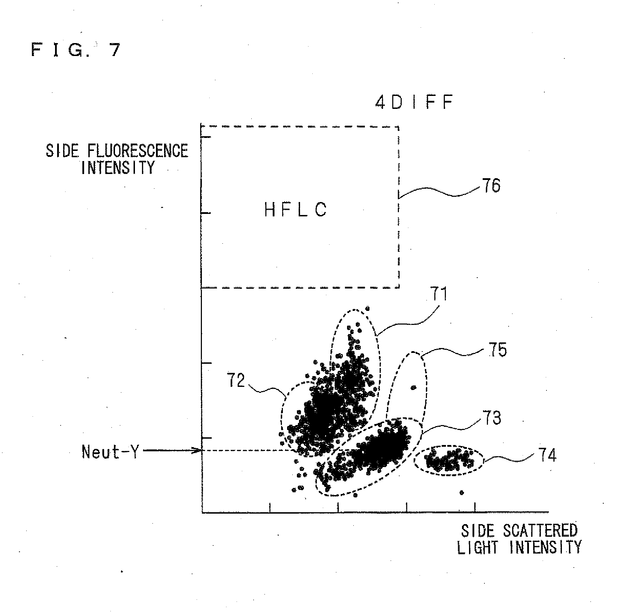

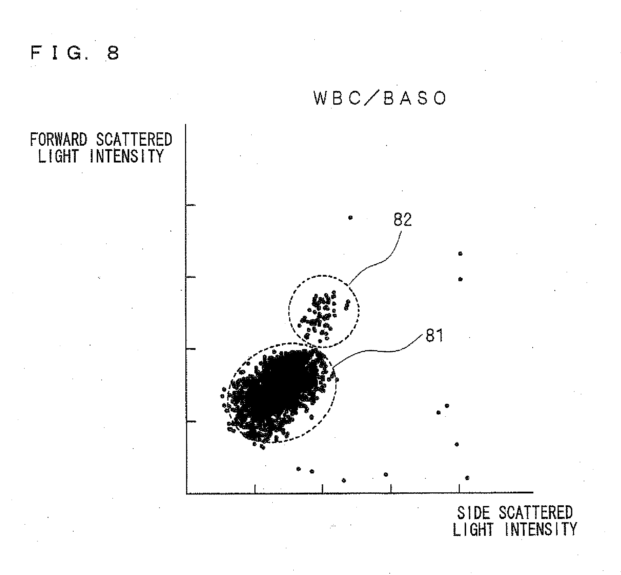

FIG. 7 shows a 4 DIFF scattergram created by the blood cell counter 1 according to the embodiment of the present invention. FIG. 8 shows a WBC/BASO scattergram created by the blood cell counter 1 according to the embodiment of the present invention. As shown in FIG. 7, the 4 DIFF scattergram classifies the white blood cells into six areas of a monocyte (MONO) area 71, a lymphocyte (LYMPH) area 72, a neutrophil (Neut) + basophil (BASO) area 73, an eosinophil (EO) area 74, an immature granulocyte (1G) area 75, and a differentiated B lymphocyte (HFLC: highly fluorescent lymphocyte cell) area 76. The sum of the number of the neutrophils (Neut) and the number of the basophils (BASO) can be calculated by counting the number of the white blood cells in the neutrophil (Neut) + basophil (BASO) area 73, based on the 4 DIFF scattergram.

In order to calculate the neutrophil count (Neut#) from the sum of the number of the neutrophils (Neut) and the number of the basophils (BASO), the number of the basophils (BASO) is determined by using the WBC/BASO scattergram. As shown in FIG. 8, the WBC/BASO scattergram classifies the white blood cells into two areas of a monocyte (MONO) + lymphocyte (LYMPH) + neutrophil (Neut) + eosinophil (EO) area 81 and a basophil (BASO) area 82. Accordingly, the number of the basophils (BASO) in the basophil (BASO) area 82 can be calculated by counting the number of the white blood cells in the basophil (BASO) area 82, based on the WBC/BASO scattergram. The neutrophil count (Neut#) can be calculated by subtracting the number of the basophils (BASO) calculated based on the WBC/BASO scattergram from the sum of the number of the neutrophils (Neut) and the number of the basophils (BASO) calculated based on the 4 DIFF scattergram.

Next, the CPU 31a calculates a value indicating the degree of staining of the neutrophils (Neut-Y), which is analytical information about the granulocytes in the blood, by using the 4 DIFF scattergram (step S55). Specifically, the value indicating the degree of staining of the neutrophils (Neut-Y) can be calculated by calculating, based on the 4 DIFF scattergram, the average value of the side fluorescence intensities of all the cells contained in the neutrophil (Neut) + basophil (BASO) area 73 (i.e., neutrophils (Neut) and basophils (BASO)). Although the calculated value indicating the degree of staining of the neutrophils (Neut-Y) includes an influence of side scattered light intensities of the basophils (BASO), the number of the basophils (BASO) is small and therefore the influence is small.

Next, the CPU 31a calculates an immature granulocyte count (1G#), which is analytical information about the granulocytes in the blood, by using the 4 DIFF scattergram (step S56). Specifically, the immature granulocyte count (IG#) can be calculated by counting the number of the white blood cells in the immature granulocyte (IG) area 75, based on the 4 DIFF scattergram.

Next, the CPU 31a calculates a differentiated B lymphocyte count (HFLC#), which is analytical information about the plasma cells in the blood, by using the 4 DIFF scattergram (step S57). Specifically, the differentiated B lymphocyte count (HFLC#) can be calculated by counting the number of the white blood cells in the differentiated B lymphocyte (HFLC) area 76, based on the 4 DIFF scattergram.

Next, the CPU 31a selects at least two types of analytical information from a plurality of types of analytical information (RET-He, Delta-He, Neut#, Neut-Y, IG#, HFLC#) obtained in step S53 to step S57, sets a score value for each selected type of the analytical information, according to a predetermined standard, and calculates an index by totaling the set score values (step S58). The index calculated in step S58 is hereinafter referred to as an index (ICIS: Intensive Care Infection Score). The score value set for each type of the analytical information is obtained by comparing the analytical information obtained in step S53 to step S57 with the score thresholds for each type of analytical information stored in advance in the hard disk 31c.

Now, description is given of a method for determining a score threshold. A score threshold is determined in advance, for example, in accordance with a method described below by a developer or the like of the blood cell counter 1, and stored in the hard disk 31c. The embodiment of the present invention uses an ROC (Receiver Operating Characteristic) analysis which uses ROC curves in order to determine score thresholds. Generally, the ROC analysis is used for evaluation of the accuracy of screening tests and the like and for comparison of conventional tests with new tests. An ROC curve is drawn on a graph having a vertical axis of sensitivity (%) and a horizontal axis of 100-specificity (%). Note that the sensitivity (%) is a percentage of the subjects determined as having an infectious inflammatory response in the subjects having an infectious inflammation. The specificity (%) is a percentage of the subjects determined as having a noninfectious inflammatory response in the subjects having a noninfectious inflammation.

An ROC curve is created by a developer or the like of the blood cell counter 1 in the method as described below. When the neutrophil count (Neut#) is used as a type of analytical information, for example, such a developer or the like sets a threshold value, and then determines, based on the threshold value and the neutrophil count (Neut#) of a subject, whether the inflammatory response of the subject is an infectious inflammatory response or a noninfectious inflammatory response. This determination is performed on a plurality of subjects. Then, the developer or the like calculates a sensitivity (%) and a specificity (%) based on the determination results of the plurality of subjects. Further, the developer or the like plots a mark (point) at a point representing the calculated sensitivity (%) and the calculated specificity (%) on the graph having the vertical axis of sensitivity (%) and the horizontal axis of 100-specificity (%). That is, the mark (point) corresponds to the sensitivity (%) and the specificity (%) for the set threshold value. The developer or the like repeats the determination, the calculation, and the marking described above while sequentially changing the threshold values. Then, the developer or the like draws a curve that approximates a plurality of marks (points) plotted on the graph. This curve is an ROC curve.

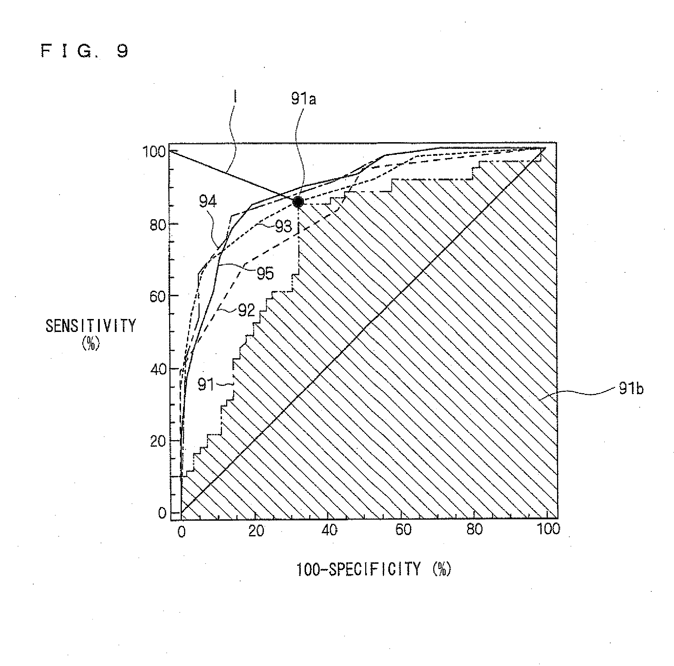

FIG. 9 shows ROC curves. The graph shown in FIG. 9 has a vertical axis of sensitivity and a horizontal axis of 100-specificity. The curve 91 is an ROC curve of the neutrophil count (Neut#). In the curve 91, a point 91a at which a distance 1 from the coordinates (0, 100) to the curve 91 is shortest is the optimum point of the balance between the sensitivity and the specificity. The threshold value that is set when the point 91a is marked is the best cutoff value. Of the areas surrounded by the curve 91 and the axes, the one on the side of the coordinates (100, 0) is an AUC (Area Under the Curve) 91b of the neutrophil count (Neut#). The curve 91 is an ROC curve drawn based on 116 subjects (61 subjects having an infectious inflammation and 55 subjects having a noninfectious inflammation).

Description is now returned to the method of determining a score threshold. First, the developer or the like obtains the best cutoff value based on the ROC curve, and designates the best cutoff value as a first score threshold. Then, the developer or the like designates as a second score threshold the threshold value set for a point at which the specificity is 80% based on the ROC curve. Further, the developer or the like designates as a third score threshold the threshold value set for a point at which the specificity is 90% based on the ROC curve. For example, the first to the third score thresholds of the neutrophil count (Neut#) are 480/µl, 500/µl, and 550/µl, respectively.

The developer or the like also determines first to third score thresholds for other types of analytical information (RET-He, Delta-He, Neut-Y, IG#, HFLC#) in the same manner as above. In the embodiment, the threshold value set for the point at which the specificity is 80% is the second score threshold, and the threshold value set for the point at which the specificity is 90% is the third score threshold. However, the specificities corresponding to the second and the third score thresholds may be changed as appropriate depending on the obtained ROC curve.

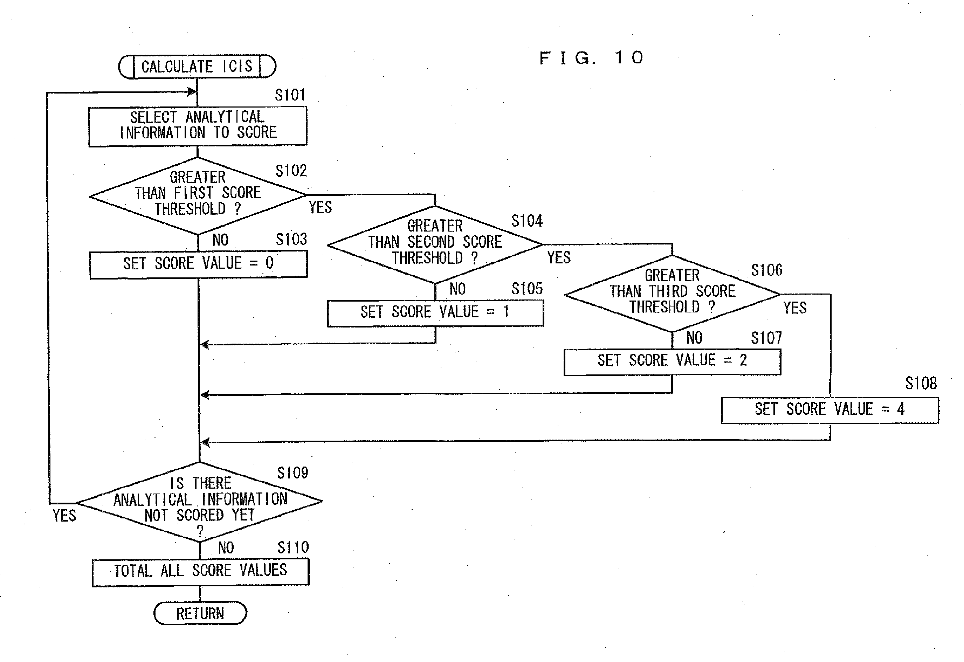

Hereinafter, description is given of processing in which the CPU 31a calculates, by using the above described score thresholds stored in the hard disk 31c in advance, a score value for each type of analytical information, and calculates an index (ICIS) by totaling the calculated score values. FIG. 10 is a flowchart showing a sequence of calculating an index (ICIS) performed by the CPU 31 a of the data processing section 31 of the data processing unit 3 of the blood cell counter 1 according to the embodiment of the present invention. The CPU 31a selects at least two types of analytical information from a plurality of types of analytical information obtained by the calculation in step S53 to step S57 in FIG. 5, and selects from the selected types of analytical information a type of analytical information to be scored (step S101). For example, when the selected types of analytical information are the difference (Delta-He) between the hemoglobin amount contained in the reticulocytes (RET) and the hemoglobin amount contained in the mature red blood cell (RBC), the neutrophil count (Neut#), the value indicating the degree of staining of the neutrophils (Neut-Y), the immature granulocyte count (IG#), and the differentiated B lymphocyte count (HFLC#), the CPU 31a selects the neutrophil count (Neut#) as the type of analytical information to be scored first. Next, the CPU 31a determines whether or not the neutrophil count (Neut#) calculated in step S54 is greater than the first score threshold (step S102). If the CPU 31a determines that the calculated neutrophil count (Neut#) is not greater than the first score threshold (step S102: NO), the CPU 31a sets the score value at "0 (zero)" (step S103).

If the CPU 31a determines that the calculated neutrophil count (Neut#) is greater than the first score threshold (step S102: YES), then the CPU 31a determines whether or not the calculated neutrophil count (Neut#) is greater than the second score threshold (step S104). If the CPU 31a determines that the calculated neutrophil count (Neut#) is not greater than the second score threshold (step S104: NO), the CPU 31a sets the score value at "1" (step S105).

If the CPU 31a determines that the calculated neutrophil count (Neut#) is greater than the second score threshold (step S104: YES), then the CPU 31a determines whether or not the calculated neutrophil count (Neut#) is greater than the third score threshold (step S106). If the CPU 31a determines that the calculated neutrophil count (Neut#) is not greater than the third score threshold (step S106: NO), the CPU 31a sets the score value at "2" (step S107). If the CPU 31a determines that the calculated neutrophil count (Neut#) is greater than the third score threshold (step S 106: YES), the CPU 31a sets the score value at "4" (step S108).

When the CPU 31a has set such a score value of the calculated neutrophil count (Neut#) in step S103, S105, S107, or S108, the CPU 31a determines whether or not there is, among the plurality of types of analytical information selected in step S101, a type of analytical information that has not yet been scored (step S109). If the CPU 31a determines that there is, among the plurality of types of analytical information selected in step S101, a type of analytical information that has not yet been scored (step S109: YES), then the CPU 31a returns the processing to step S101. If the CPU 31a determines that all the plurality of types of analytical information selected in step S101 have been scored (step S109: NO), then the CPU 31a totals the score values of the respective types of analytical information, which total constitutes the index (ICIS) (step S110). Note that the method of calculating the index (ICIS) is not limited to the method of simply totaling the score values of the respective types of analytical information. Alternatively, the score value of each type of analytical information may be plugged into a predetermined formula for calculating an index (ICIS). Further, for example, weights may be assigned to the score values of the respective types of analytical information as appropriate, and then the weighted score values may be totaled.

Returning to FIG. 5, the CPU 31a determines, based on the index (ICIS) calculated in step S58, whether the inflammatory response of the subject is an infectious inflammatory response or a noninfectious inflammatory response (step S59). In an example of a method of determining based on the index (ICIS) whether the inflammatory response of the subject is an infectious inflammatory response or a noninfectious inflammatory response, the CPU 31a determines that the inflammatory response of the subject is or probably is an infectious inflammatory response if the index (ICIS) is not less than a determination threshold stored in the hard disk 31c; and determines that the inflammatory response of the subject is or probably is a noninfectious inflammatory response if the index (ICIS) is less than the determination threshold.

Now, description is given of the fact that it is possible to determine based on the index (ICIS) calculated in step S58 whether the inflammatory response of the subject is an infectious inflammatory response or a noninfectious inflammatory response, and of a method of determining a determination threshold to be compared with the index (ICIS). Note that the determination threshold is determined in advance by the developer or the like of the blood cell counter 1 and stored in the hard disk 31c.

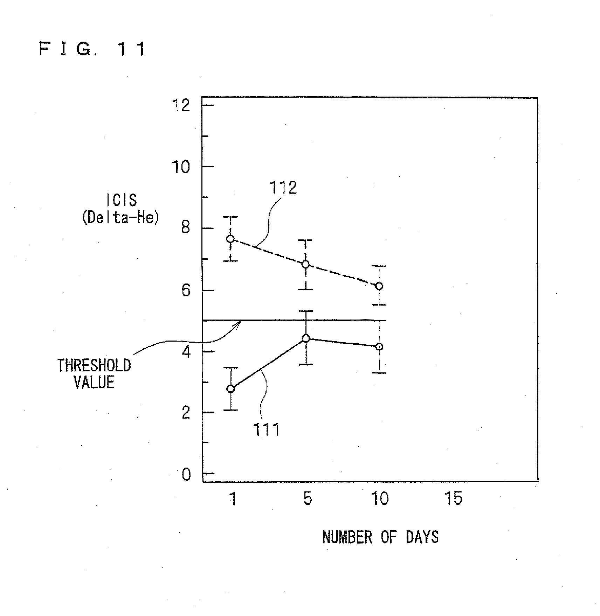

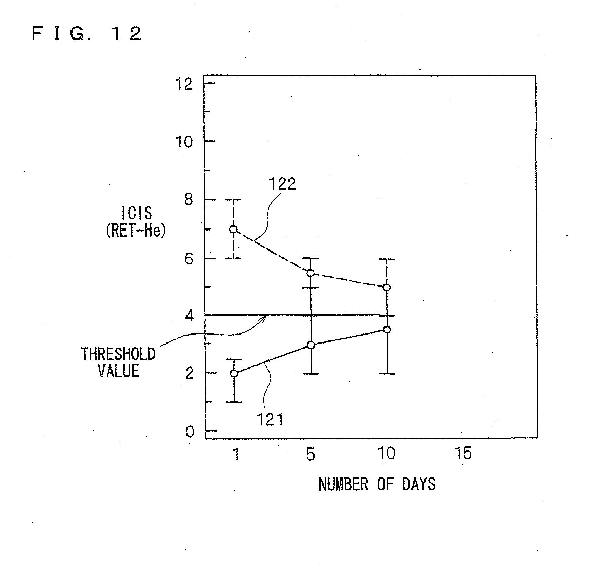

FIG. 11 shows changes of an index (ICIS (Delta-He)) in subjects with infectious inflammatory responses and subjects with noninfectious inflammatory responses, respectively. FIG. 12 shows changes of an index (ICIS(RET-He)) in subjects with infectious inflammatory responses and subjects with noninfectious inflammatory responses, respectively. In FIG. 11, the graph has a horizontal axis of the number of days since a subject has started to show a systemic inflammatory response and a vertical axis of the index (ICIS (Delta-He)) calculated by totaling the respective values of scored Delta-He, Neut#, Neut-Y, IG#, and HFLC#. The line 111 shows the average value of the indices (ICIS (Delta-He)) of subjects with noninfectious inflammations. The line 112 shows the average value of the indices (ICIS (Delta-He)) of subjects with infectious inflammations. Each error bar attached to the lines 111 and 112 shows the highest value and the lowest value of an index (ICIS (Delta-He)).

Most of the indices (ICIS (Delta-He)) indicated by the line 111 are not greater than "5", and most of the indices (ICIS (Delta-He)) indicated by the line 112 are greater than "5". Therefore, "5" can be determined as the determination threshold for determining whether the inflammatory response of a subject is an infectious inflammatory response or a noninfectious inflammatory response. That is, if an index (ICIS (Delta-He)) is calculated of a subject within 12 days since the subject has started to show a systemic inflammatory response, by using the blood cell counter 1 according to the embodiment of the present invention, and if the calculated index (ICIS (Delta-He)) is greater than "5", it is possible to determine that the inflammatory response of the subject is an infectious inflammatory response.

In the same manner, the exemplary graph shown in FIG. 12 has a horizontal axis of the number of days since a subject has started to show a systemic inflammatory response and a vertical axis of an index (ICIS (RET-He)) calculated by totaling the respective values of scored RET-He, Neut#, Neut-Y IG#, and HFLC#. The line 121 shows the average value of the indices (ICIS (RET-He)) of subjects with noninfectious inflammations. The line 122 shows the average value of the indices (ICIS (RET-He)) of subjects with infectious inflammations. Each error bar attached to the lines 121 and 122 shows the highest value and the lowest value of an index (ICIS (RET-He)).

Most of the indices (ICIS (RET-He)) indicated by the line 121 are not greater than "4", and most of the indices (ICIS (RET-He)) indicated by the line 122 are greater than "4". Therefore, "4" can be determined as the determination threshold for determining whether the inflammatory response of the subject is an infectious inflammatory response or a noninfectious inflammatory response. That is, if an index (ICIS (RET-He)) is calculated of a subject within 12 days since the subject has started to show a systemic inflammatory response, by using the blood cell counter 1 according to the embodiment of the present invention, and if the calculated index (ICIS (RET-He)) is greater than "4", it is possible to determine that the inflammatory response of the subject is an infectious inflammatory response.

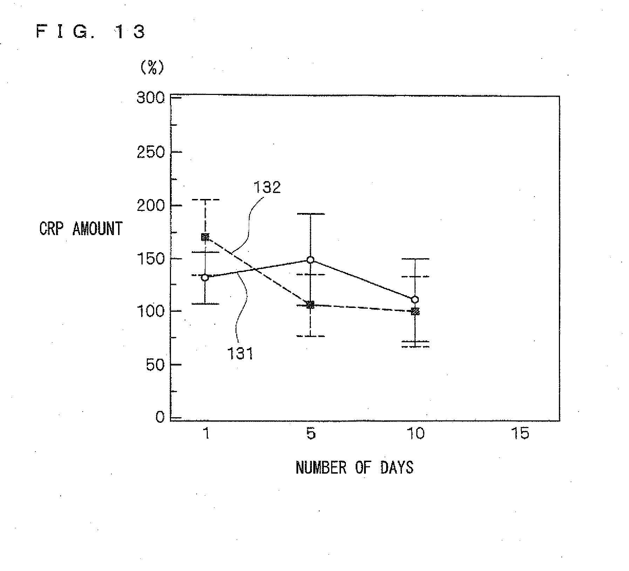

Conventionally, in order to determine whether the inflammatory response of a subject is an infectious inflammatory response or a noninfectious inflammatory response, there are cases where a method using a CRP amount is used. This method utilizes the fact that the amount of a protein called CRP increases in the blood of a subject when inflammations or cell destructions occur in the body of the subject. FIG. 13 shows changes of the CRP amount used for determining whether the inflammatory response of a subject is an infectious inflammatory response or a noninfectious inflammatory response. In the example shown in FIG. 13, the graph has a horizontal axis of the number of days since a subject has started to show a systemic inflammatory response and a vertical axis of CRP amount (percentage (%) in 8.5 mg/dl). The line 131 shows the average value of the CRP amounts of subjects with noninfectious inflammations. The line 132 shows the average value of the CRP amounts of subjects with infectious inflammations. Each error bar attached to the lines 131 and 132 shows the highest value and the lowest value of a CRP amount.

Since the line 131 and the line 132 cannot be separated by a threshold value, even if the CRP amount of the subject showing a systemic inflammatory response is calculated, whether the inflammatory response of the subject within 10 days since the subject started to show the inflammatory response is an infectious inflammatory response or a noninfectious inflammatory response cannot be determined.

Each index (ICIS) calculated in the blood cell counter 1 according to the embodiment of the present invention is calculated by scoring each of the selected plurality of types of analytical information, and then by totaling the scored values. Next, specific description is given on the combination of the types of the analytical information used for calculation of an index (ICIS).

In FIG. 9, a curve 92 is an ROC curve obtained based on an index (ICIS-2d), which is obtained by selecting Delta-He and Neut# as analytical information and then totaling the score values of the respective types of analytical information. Similarly, a curve 93 is an ROC curve obtained based on an index (ICIS-3d), which is obtained by selecting Delta-He, Neut#, and Neut-Y as analytical information and then totaling the score values of the respective types of analytical information. A curve 94 is an ROC curve obtained based on an index (ICIS-4d), which is obtained by selecting Delta-He, Neut#, Neut-Y, and IG# as analytical information and then totaling the score values of the respective types of analytical information. A curve 95 is an ROC curve obtained based on an index (ICIS (Delta-He)), which is obtained by selecting Delta-He, Neut#, Neut-Y, IG#, and HFLC# as analytical information and then totaling the score values of the respective types of analytical information.

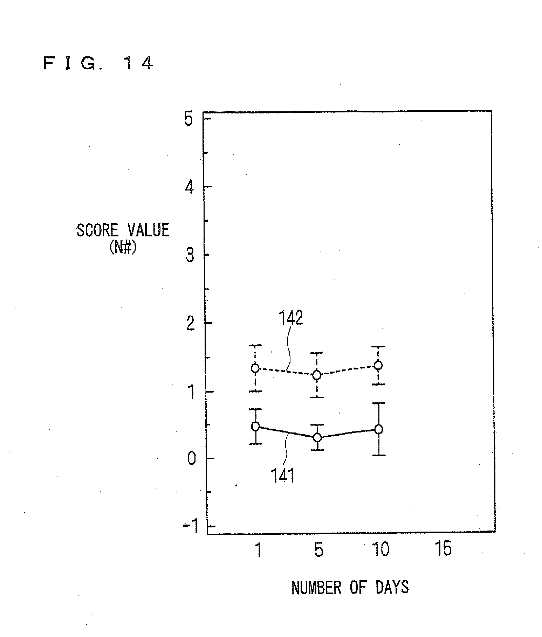

The AUC values of the curve 92, the curve 93, the curve 94, and the curve 95 are 0.837, 0.879, 0.895, and 0.891, respectively, which are greater than the AUC value of the curve 91 (0.745). FIG. 14 shows changes of the score values of the neutrophil count (Neut#). In FIG. 14, the graph has a horizontal axis of the number of days since a subject started to show a systemic inflammatory response and a vertical axis of the score value of the neutrophil count (Neut#). A line 141 shows the average value of the score values of the neutrophil count (Neut#) of subjects with noninfectious inflammations. A line 142 shows the average value of the score values of the neutrophil count (Neut#) of subjects with infectious inflammations. Each error bar attached to the lines 141 and 142 shows the highest value and the lowest value of a score value.

The score values of the line 141 and the line 142 are in the vicinity of "1". Accordingly, the line 141 and the line 142 cannot be separated by a threshold value. That is, even if only the score value of the neutrophil count (Neut#) of a subject showing a systemic inflammatory response is calculated, it is difficult to determine whether the inflammatory response of the subject is an infectious inflammatory response or a noninfectious inflammatory response.

In contrast, with respect to the index (ICIS (Delta-He)), its AUC value is 0.891, which is substantially greater than the AUC value of the neutrophil count (Neut#) (0.745). Therefore, as shown in FIG. 11, the index (ICIS (Delta-He)) can be used for determining whether the inflammatory response of the subject is an infectious inflammatory response or a noninfectious inflammatory response. Meanwhile, it is generally known that the greater the AUC value of an ROC curve is, the more useful the AUC value is as an index for the determination. With respect to the indices (ICIS-2d, ICIS-3d, and ICIS-4d), each AUC value is also substantially greater than the AUC value of the neutrophil count (Neut#). Therefore, it is possible to consider that such indices (ICIS-2d, ICIS-3d, and ICIS-4d) can be used for determining whether the inflammatory response of the subj ect is an infectious inflammatory response or a noninfectious inflammatory response.

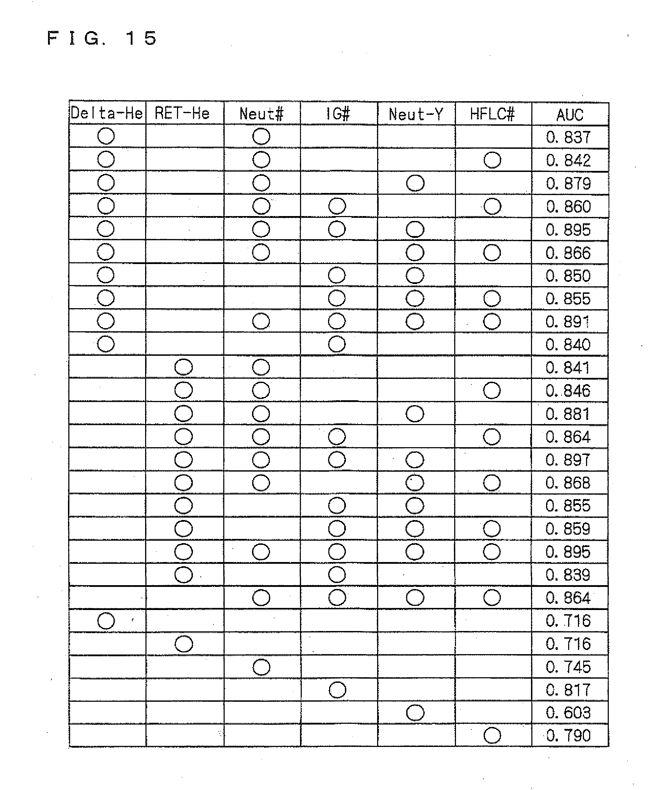

FIG. 15 shows AUC values and combinations of analytical information used in calculating the indices (ICIS). A circle in FIG. 15 denotes the type of analytical information used in calculation of an index (ICIS). For each AUC value in the AUC column, the AUC value corresponds to the index (ICIS) obtained by totaling the score values of the types of analytical information denoted by one or more circles in the same row that the AUC value is in. For reference, AUC values each calculated by using a single type of analytical information are also shown. Each of the indices (ICIS) calculated by using a combination of a plurality of types of analytical information has an AUC value substantially greater than the AUC value calculated by using a single type of analytical information (for example, neutrophil count (Neut#)). Therefore, it is possible to consider that such indices (ICIS) can be used for determining whether the inflammatory response of the subject is an infectious inflammatory response or a noninfectious inflammatory response.

Description is now returned to the output process of the diagnosis support information performed by the CPU 31a (see FIG. 5). The CPU 31a reads diagnosis support information from the hard disk 31c, based on the determination result in step S59, and outputs the diagnosis support information via the image output interface 31f to the image display section 32, and via the communication interface 31g to another computer, printer, or the like (step S60). Specifically, in step S60, if the determination result in step S59 is a determination that the inflammatory response is or probably is an infectious inflammatory response (that is, the index (ICIS) is greater than the determination threshold), the CPU 31a reads from the hard disk 31c the message showing that the subject has or probably has an infectious inflammation, to be outputted as diagnosis support information. On the other hand, in step S60, if the determination result in step S59 is a determination that the inflammatory response is or probably is a noninfectious inflammatory response (that is, the index (ICIS) is not greater than the determination threshold), the CPU 31 a reads from the hard disk 31c the message showing that the subject has or probably has a noninfectious inflammation, to be outputted as diagnosis support information.

As described above, in the blood cell counter 1 according to the embodiment of the present invention, the data processing unit 3 obtains, based on the result of the detection of the blood cells performed by the detector 5 of the detection unit 2, first analytical information, which is analytical information about the hemoglobin amount of the red blood cells in the blood (for example, Delta-He and RET-He), and second analytical information, which is analytical information about the granulocytes in the blood (for example, Neut#, IG#, and Neut-Y). Then the data processing unit 3 outputs, based on the obtained first analytical information and the obtained second analytical information, diagnosis support information supporting determination of whether the inflammatory response of the subject is an infectious inflammatory response or a noninfectious inflammatory response. Accordingly, it is not necessary to culture the blood or to detect the blood cells in the blood by using an apparatus other than the blood cell counter. Therefore, it is possible to reduce the work and costs necessary for performing tests.

Further, the blood cell counter 1 according to the embodiment of the present invention can calculate, based on the result of the detection of the blood cells in the blood of the subject showing a systemic inflammatory response, an index (ICIS) by using a predetermined standard, and can determine, based on the calculated index (ICIS), whether the inflammatory response of the subject is an infectious inflammatory response or a noninfectious inflammatory response. Accordingly, with respect to a subject who has not been given a diagnosis of SIRS, it is possible to support the determination of whether the inflammatory response is an infectious inflammatory response or a noninfectious inflammatory response by using the index based on the analytical information obtained by the blood cell counter 1. Therefore, it is possible to reduce the work and costs necessary for performing tests.

Further, the blood cell counter 1 according to the embodiment of the present invention can calculate, based on the result of the detection of the blood cells in the blood of the subject who has been given a diagnosis of SIRS, an index (ICIS) by using a predetermined standard, and can determine, based on the calculated index (ICIS), whether or not the inflammatory response of the subject is an infectious type of SIRS (septicemia). Therefore, also with respect to a subject who has been given a diagnosis of SIRS, it is possible to support the determination of whether the inflammatory response is an infectious inflammatory response or a noninfectious inflammatory response by using the index based on the analytical information obtained by the blood cell counter 1. Therefore, it is possible to reduce the work and costs necessary for performing tests.

Still further, the blood cell counter 1 according to the embodiment of the present invention can calculate, based on the result of the detection of the blood cells in the blood of a subject in an intensive care unit, an index (ICIS) by using a predetermined standard, and can determine, based on the calculated index (ICIS), whether the inflammatory response of the subject is an infectious inflammatory response or a noninfectious inflammatory response. Therefore, also with respect to the subject in the intensive care unit, it is possible to support the determination of whether the inflammatory response is an infectious inflammatory response or a noninfectious inflammatory response by using the index based on the analytical information obtained by the blood cell counter 1. Therefore, it is possible to reduce the work and costs necessary for performing tests.

Note that the blood cell counter 1 according to the embodiment above outputs the message showing that the subject has or probably has a noninfectious inflammation as diagnosis support information. However, the present invention is not limited thereto. The blood cell counter 1 may output the index (ICIS) calculated in step S58 as diagnosis support information.

The blood cell counter 1 according to the embodiment above calculates an index (ICIS) and determines, based on the calculated index (ICIS), whether the inflammatory response of the subject is an infectious inflammatory response or a noninfectious inflammatory response. However, the present invention is not limited thereto. The blood cell counter 1 may determine, by using another determination formula, whether the inflammatory response of the subject is an infectious inflammatory response or a noninfectious inflammatory response. Such a determination formula may be created by obtaining analytical information for subjects with infectious inflammations and subjects with noninfectious inflammations, and then performing a multivariate analysis on the obtained analytical information.

Note that the data processing unit 3 may be separated from the blood cell counter 1 according to the embodiment of the present invention. The separated data processing unit 3 may be structured as a diagnosis support apparatus that receives the first analytical information, which is the analytical information about the hemoglobin amount of the red blood cells in the blood (for example, Delta-He and RET-He), and the second analytical information, which is the analytical information about the granulocytes in the blood (for example, Neut#, IG#, and Neut-Y), the first and second analytical information being based on the result of the detection of the blood cells in the blood of the subject, and then outputs diagnosis support information for supporting the determination of whether the inflammatory response of the subject is an infectious inflammatory response or a noninfectious inflammatory response based on the first analytical information and the second analytical information.

In other words, this diagnosis support apparatus does not include the detection unit 2 and is structured as an apparatus, for performing only step S58 to step S60 shown in FIG. 5. Accordingly, this diagnosis support apparatus can, when it is configured to receive the first analytical information and the second analytical information, determine whether the inflammatory response of the subject is an infectious inflammatory response or a noninfectious inflammatory response even if it is located away from the detection unit 2.

## Claims

1. A blood cell counter comprising:
a detector adapted to detect blood cells in blood of a subject; and a controller adapted to obtain , based on a detection result by the detector, first analytical information about hemoglobin amount of red blood cells in the blood and second analytical information about granulocytes in the blood, and for outputting diagnosis support information for supporting determination of whether an inflammatory response of the subject is an infectious inflammatory response or a noninfectious inflammatory response, based on the first analytical information and the second analytical information that have been obtained, wherein
the controller calculates an index based on the first analytical information and the second analytical information by using a predetermined standard, and outputs the diagnosis support information based on the calculated index.

2. The apparatus of claim 1, wherein
the first analytical information is information about hemoglobin amount of reticulocytes.

3. The apparatus of claim 1, wherein
the first analytical information is information about a difference between hemoglobin amount of reticulocytes and hemoglobin amount of mature red blood cells.

4. The apparatus of any one of claims 1 to 3, wherein
the second analytical information is information about neutrophils or immature granulocytes.

5. The apparatus of any one of claims 1 to 4, wherein
the controller obtains third analytical information about plasma cells based on the detection result by the detector, and outputs the diagnosis support information based on all analytical information from the first analytical information to the third analytical information.

6. The apparatus of claim 5, wherein
the detector is configured to detect blood cells in stained blood, and
the controller obtains analytical information about the number of neutrophils as the second analytical information, obtains based on the detection result by the detector fourth analytical information indicating a degree of staining of neutrophils and fifth analytical information about a number of immature granulocytes, and outputs the diagnosis support information based on all analytical information from the first analytical information to the fifth analytical information.

7. The apparatus of claim 1, wherein
the diagnosis support information is outputted based on a result of comparing the index calculated by using the predetermined standard with a predetermined threshold value.

8. The apparatus of any one of claims 1 to 6, wherein
the controller calculates an index based on the first analytical information and the second analytical information by using a predetermined standard, and outputs the calculated index as the diagnosis support information.

9. A diagnosis support method, using an apparatus according to claim 1, comprising:
receiving inputs of first analytical information and second analytical information, the first analytical information and the second analytical information being based on a result of detection of blood cells in blood of a subject, the first analytical information being about hemoglobin amount of red blood cells in the blood, the second analytical information being about granulocytes in the blood; and
outputting diagnosis support information for supporting determination of whether an inflammatory response of the subject is an infectious inflammatory response or a noninfectious inflammatory response, based on the first analytical information and the second analytical information of which inputs have been received, wherein
the outputting of the diagnosis support information is performed based on an index that is based on the first analytical information and the second analytical information of which inputs have been received and that is calculated by using a predetermined standard.

10. The method of claim 9, wherein
the outputting of the diagnosis support information is performed based on a result of comparing the index calculated by using the predetermined standard with a predetermined threshold value.

11. The method of claim 9 wherein
the diagnosis support information is an index that is based on the first analytical information and the second analytical information of which inputs have been received and that is calculated by using a predetermined standard.

12. The method of any one of claims 9 to 11, wherein
the first analytical information and the second analytical information of which inputs are received are information based on a result of detection of blood cells in blood of a subject showing a systemic inflammatory response, information based on a result of detection of blood cells in blood of a subject who has been given a diagnosis of Systemic Inflammatory Response Syndrome, or information based on a result of detection of blood cells in blood of a subject in an intensive care unit.

13. A computer program product, comprising:
a computer readable medium; and
instructions, on the computer readable medium, adapted to enable a general purpose computer to perform operations comprising:
receiving inputs of first analytical information and second analytical information, the first analytical information and the second analytical information being based on a result of detection of blood cells in blood of a subject, the first analytical information being about hemoglobin amount of red blood cells in the blood, the second analytical information being about granulocytes in the blood; and
outputting diagnosis support information for supporting determination of whether an inflammatory response of the subject is an infectious inflammatory response or a noninfectious inflammatory response, based on the first analytical information and the second analytical information of which inputs have been received, wherein
the outputting of the diagnosis support information is performed based on an index that is based on the first analytical information and the second analytical information of which inputs have been received and that is calculated by using a predetermined standard.

## Patentansprüche

1. Eine Blutzellen-Zähleinheit, umfassend:
eine Detektoreinheit, angepasst zum Detektieren von Zellen im Blut einer Testperson; und
eine Steuereinheit, angepasst zum Erhalten, basierend auf dem Detektionsergebnis von der Detektoreinheit, einer ersten analytischen Information über einen Hämoglobinbetrag der roten Blutzellen in dem Blut und einer zweiten analytischen Information über Granulozyten in dem Blut, und zum Ausgeben einer Diagnoseunterstützungsinformation zum Unterstützen einer Bestimmung, ob eine Entzündungsreaktion der Testperson eine ansteckende Entzündungsreaktion oder eine nicht ansteckende Entzündungsreaktion ist, basierend auf der ersten analytischen Information und der zweiten analytischen Information, welche erhalten wurden, wobei
die Steuereinheit einen Index basierend auf der ersten analytischen Information und der zweiten analytischen Information durch Verwenden eines vorbestimmten Standards berechnet und die Diagnoseunterstützungsinformation basierend auf dem berechneten Index ausgibt.

2. Vorrichtung gemäß Anspruch 1, wobei
die erste analytische Information eine Information über einen Hämoglobinbetrag von Retikulozyten ist.

3. Vorrichtung gemäß Anspruch 1, wobei
die erste analytische Information eine Information über einen Unterschied zwischen dem Hämoglobinbetrag von Retikulozyten und einem Hämoglobinbetrag von voll entwickelten roten Blutzellen ist.

4. Vorrichtung gemäß einem der Ansprüche 1 bis 3, wobei
die zweite analytische Information eine Information über Neutrophilen oder nicht ausgereiften Granulozyten ist.

5. Vorrichtung gemäß einem der Ansprüche 1 bis 4, wobei
die Steuereinheit dritte analytische Informationen über Plasmazellen basierend auf dem Erkennungsergebnis durch die Detektoreinheit erhält und die Diagnoseunterstützungsinformation basierend auf allen analytischen Informationen von der ersten analytischen Information bis zu der dritten analytischen Information ausgibt.

6. Vorrichtung gemäß Anspruch 5, wobei
die Detektoreinheit ausgebildet ist, um Blutzellen in beschmutztem Blut zu detektieren, und
die Steuereinheit analytische Informationen über die Anzahl von Neutrophilen als die zweite analytische Information erhält, basierend auf dem Detektionsergebnis von der Detektoreinheit vierte analytische Informationen erhält, welche einen Verschmutzungsgrad von Neutrophilen angeben, und fünfte analytische Informationen über eine Anzahl von nicht ausgereiften Granulozyten und die Diagnoseunterstützungsinformation basierend auf allen analytischen Informationen von der ersten analytischen Information bis zur fünften analytischen Information ausgibt.

7. Vorrichtung gemäß Anspruch 1, wobei
die Diagnoseunterstützungsinformation basierend auf einem Vergleichsergebnis des durch den vorbestimmten Standard berechneten Index mit einem vorbestimmten Schwellenwert ausgegeben wird.

8. Vorrichtung gemäß einem der Ansprüche 1 bis 6, wobei
die Steuereinheit den Index basierend auf der ersten analytischen Information und der zweiten analytischen Information durch Verwenden eines vorbestimmten Standards berechnet und den berechneten Index als die Diagnoseunterstützungsinformation ausgibt.

9. Ein Diagnoseunterstützungsverfahren, unter Verwendung einer Vorrichtung gemäß Anspruch 1, umfassend:
Empfangen von Eingaben einer ersten analytischen Information und einer zweiten analytischen Information, wobei die erste analytische Information und die zweite analytische Information auf einem Detektionsergebnis von Blutzellen im Blut einer Testperson basieren, wobei die erste analytische Information über einen Hämoglobinbetrag der roten Blutzellen in dem Blut ist, wobei die zweite analytische Information über Granulozyten in dem Blut ist; und
Ausgeben einer Diagnoseunterstützungsinformation zur Unterstützung einer Bestimmung, ob eine Entzündungsreaktion der Testperson eine ansteckende Entzündungsreaktion oder eine nicht ansteckende Entzündungsreaktion ist, basierend auf der ersten analytischen Information und der zweiten analytischen Information, von welchen Eingaben empfangen wurden, wobei
das Ausgeben der Diagnoseunterstützungsinformation basierend auf einem Index ausgeführt wird, welche auf der ersten analytischen Information und der zweiten analytischen Information, von welchen Eingaben empfangen wurden, und welche durch Verwenden eines vorbestimmten Standards berechnet ist, basiert.

10. Verfahren gemäß Anspruch 9, wobei
das Ausgeben der Diagnoseunterstützungsinformation basierend auf einem Vergleichsergebnis des durch Verwenden des vorbestimmten Standards berechneten Index mit einem vorbestimmten Schwellenwert ausgeführt wird.

11. Verfahren gemäß Anspruch 9, wobei
die Diagnoseunterstützungsinformation ein Index ist, welcher auf der ersten analytischen Information und der zweiten analytischen Information, von welchen Eingaben empfangen wurden, und welche durch Verwenden eines vorbestimmten Standards berechnet wird, basiert.

12. Verfahren gemäß einem der Ansprüche 9 bis 11, wobei
die erste analytische Information und die zweite analytische Information, von welchen Eingaben empfangen wurden, Informationen, welche auf einem Detektionsergebnis von Blutzellen in einem Blut einer Testperson basieren, welche eine systemische Entzündungsreaktion zeigt, Informationen, welche auf einem Detektionsergebnis von Blutzellen im Blut einer Testperson, welcher eine Diagnose eines Systemischen-Entzündungsreaktion-Syndroms gegeben wurde, basieren, oder Informationen, welche auf einem Detektionsergebnis von Blutzellen in einem Blut einer Testperson auf einer Intensivstation basieren sind.

13. Ein Computerprogrammprodukt, umfassend:
ein computerlesbares Medium; und
Anweisungen auf dem computerlesbaren Medium, angepasst, um einem Allzweckcomputer zu ermöglichen, Operationen auszuführen, umfassend:
Empfangen von Eingaben von einer ersten analytischen Information und einer zweiten analytischen Information, wobei die erste analytische Information und die zweite analytische Information auf einem Detektionsergebnis von Blutzellen in einem Blut einer Testperson basiert sind, wobei die erste analytische Information über einen Hämoglobinbetrag von roten Blutzellen in dem Blut ist, wobei die zweite analytische Information über Granulozyten in dem Blut ist; und
Ausgeben einer Diagnoseunterstützungsinformation zur Unterstützung einer Bestimmung, ob eine Entzündungsreaktion der Testperson eine ansteckende Entzündungsreaktion oder eine nicht-ansteckende Entzündungsreaktion ist, basierend auf der ersten analytischen Information und der zweiten analytischen Information, von welchen Eingaben empfangen wurden, wobei
das Ausgeben der Diagnoseunterstützungsinformation basierend auf einem Index, welcher auf der ersten analytischen Information und der zweiten analytischen Information, von welchen Eingaben empfangen wurden, und welche durch Verwenden eines vorbestimmten Standards berechnet ist, basiert, ausgeführt wird.

## Revendications

1. Hémocytomètre comprenant :
un détecteur adapté pour détecter des cellules sanguines dans le sang d'un sujet ; et
une unité de commande adaptée pour obtenir, sur la base d'un résultat de détection par le détecteur, des premières informations analytiques sur la quantité d'hémoglobine de globules rouges dans le sang et des deuxièmes informations analytiques sur les granulocytes dans le sang, et pour délivrer en sortie des informations d'aide au diagnostic pour aider à déterminer si une réponse inflammatoire du sujet est une réponse inflammatoire infectieuse ou une réponse inflammatoire non infectieuse, sur la base des premières informations analytiques et des deuxièmes informations analytiques qui ont été obtenues, où
l'unité de commande calcule un indice sur la base des premières informations analytiques et des deuxièmes informations analytiques en utilisant une norme prédéterminée, et délivre en sortie les informations d'aide au diagnostic sur la base de l'indice calculé.

2. Appareil de la revendication 1, dans lequel
les premières informations analytiques sont des informations sur la quantité d'hémoglobine de réticulocytes.

3. Appareil de la revendication 1, dans lequel
les premières informations analytiques sont des informations sur une différence entre la quantité d'hémoglobine de réticulocytes et la quantité d'hémoglobine de globules rouges matures.

4. Appareil de l'une quelconque des revendications 1 à 3, dans lequel
les deuxièmes informations analytiques sont des informations sur les neutrophiles ou les granulocytes immatures.

5. Appareil de l'une quelconque des revendications 1 à 4, dans lequel
l'unité de commande obtient des troisièmes informations analytiques sur des plasmocytes sur la base du résultat de détection par le détecteur, et délivre en sortie les informations d'aide au diagnostic sur la base de toutes les informations analytiques des premières informations analytiques aux troisièmes informations analytiques.

6. Appareil de la revendication 5, dans lequel
le détecteur est configuré pour détecter des cellules sanguines dans le sang coloré, et
l'unité de commande obtient des informations analytiques sur le nombre de neutrophiles comme étant les deuxièmes informations analytiques, obtient sur la base du résultat de détection par le détecteur des quatrièmes informations analytiques indiquant un degré de coloration des neutrophiles et des cinquièmes informations analytiques sur le nombre de granulocytes immatures, et délivre en sortie les informations d'aide au diagnostic sur la base de toutes les informations analytiques des premières informations analytiques aux cinquièmes informations analytiques.

7. Appareil de la revendication 1, dans lequel
les informations d'aide au diagnostic sont délivrées en sortie sur la base d'un résultat de comparaison de l'indice calculé en utilisant la norme prédéterminée avec une valeur seuil prédéterminée.

8. Appareil de l'une quelconque des revendications 1 à 6, dans lequel
l'unité de commande calcule un indice sur la base des premières informations analytiques et des deuxièmes informations analytiques en utilisant une norme prédéterminée, et délivre en sortie l'indice calculé comme étant les informations d'aide au diagnostic.

9. Procédé d'aide au diagnostic, utilisant un appareil selon la revendication 1, comprenant le fait :
de recevoir des entrées de premières informations analytiques et de deuxièmes informations analytiques, les premières informations analytiques et les deuxièmes informations analytiques étant basées sur un résultat de détection de cellules sanguines dans le sang d'un sujet, les premières informations analytiques concernant la quantité d'hémoglobine de globules rouges dans le sang, les deuxièmes informations analytiques concernant les granulocytes dans le sang ; et
de délivrer en sortie des informations d'aide au diagnostic pour aider à déterminer si une réponse inflammatoire du sujet est une réponse inflammatoire infectieuse ou une réponse inflammatoire non infectieuse, sur la base des premières informations analytiques et des deuxièmes informations analytiques dont les entrées ont été reçues, où
la sortie des informations d'aide au diagnostic est effectuée sur la base d'un indice qui est basé sur les premières informations analytiques et les deuxièmes informations analytiques dont les entrées ont été reçues et qui est calculé en utilisant une norme prédéterminée.

10. Procédé de la revendication 9, dans lequel
la sortie des informations d'aide au diagnostic est effectuée sur la base d'un résultat de comparaison de l'indice calculé en utilisant la norme prédéterminée avec une valeur seuil prédéterminée.

11. Procédé de la revendication 9, dans lequel
les informations d'aide au diagnostic sont un indice qui est basé sur les premières informations analytiques et les deuxièmes informations analytiques dont les entrées ont été reçues et qui est calculé en utilisant une norme prédéterminée.

12. Procédé de l'une quelconque des revendications 9 à 11, dans lequel
les premières informations analytiques et les deuxièmes informations analytiques dont les entrées sont reçues sont des informations basées sur un résultat de détection de cellules sanguines dans le sang d'un sujet présentant une réponse inflammatoire systémique, des informations basées sur un résultat de détection de cellules sanguines dans le sang d'un sujet ayant subi un diagnostic de Syndrome de Réponse Inflammatoire Systémique, ou des informations basées sur un résultat de détection de cellules sanguines dans le sang d'un sujet dans une unité de soins intensifs.

13. Produit de programme informatique, comprenant :
un support lisible par ordinateur ; et
des instructions, sur le support lisible par ordinateur, adaptées pour permettre à un ordinateur à usage général d'effectuer des opérations comprenant le fait :
de recevoir des entrées de premières informations analytiques et de deuxièmes informations analytiques, les premières informations analytiques et les deuxièmes informations analytiques étant basées sur un résultat de détection de cellules sanguines dans le sang d'un sujet, les premières informations analytiques concernant la quantité d'hémoglobine de globules rouges dans le sang, les deuxièmes informations analytiques concernant les granulocytes dans le sang ; et
de délivrer en sortie des informations d'aide au diagnostic pour aider à déterminer si une réponse inflammatoire du sujet est une réponse inflammatoire infectieuse ou une réponse inflammatoire non infectieuse, sur la base des premières informations analytiques et des deuxièmes informations analytiques dont les entrées ont été reçues, où
la sortie des informations d'aide au diagnostic est effectuée sur la base d'un indice qui est basé sur les premières informations analytiques et les deuxièmes informations analytiques dont les entrées ont été reçues et qui est calculé en utilisant une norme prédéterminée.
